# EUROPEAN PATENT APPLICATION

(11) **EP 3 849 283 A1**
(43) Date of publication of application: **14.07.2021**
(21) Application number: 20151009.6
(22) Date of filing: 09.01.2020
(51) Int. Cl.: H05H 1/48, H05H 1/50, B01D 53/32

(54) **EXHAUST PLASMA APPARATUS**

(71) Applicant: terraplasma emission control GmbH, 85748 Garching (DE)
(72) Inventor: MORFILL, Gregor, 81927 München (DE); LI, Yangfang, 82140 Olching (DE)
(74) Representative: Vossius & Partner Patentanwälte Rechtsanwälte mbB

(57) **Abstract**

The present invention relates to a plasma apparatus for the processing of exhaust molecules from a combustion engine comprising a first electrode structure and a second electrode structure spaced apart therefrom. The second electrode structure comprises a first portion and a second portion. The plasma apparatus further comprises a voltage source configured to establish a potential difference between the first electrode structure and the second electrode structure such that the electrical discharge may be formed therebetween. A length of the discharge path between the first electrode structure and the first portion is less than a length of the discharge path between the first electrode structure and the second portion. A magnetic field generating means generates a magnetic field oriented so as to set the electrical discharge into motion, wherein exhaust molecules flowing therethrough are excited, dissociated and/or ionized.

## Description

### Background

The invention relates to a plasma apparatus for the processing of exhaust molecules produced by combustion engines or other devices. In particular, the invention relates to a plasma apparatus for the processing of exhaust molecules at high flow speeds.

The handling of exhaust emissions is a key aspect of addressing environmental emissions concerns in both the short term and long term. A standard combustion engine, used, for example in the automotive industry produces exhaust containing NOx, SOx, HC, CO, CO₂, many of which are classified as environmentally damaging.

Standard processes for minimizing the release of environmentally dangerous exhaust components is to use chemical, pyrolitic, or catalytic reactions, such as are performed within a catalytic converter. However, such methods provide respective disadvantages. Chemical filter processes often result in unwanted byproducts, such as NH₃, CaO₂ that require further processing. Catalytic reactors require numerous expensive materials, such as Pd, Pt, Rh, V₂O₅, WO₃, TiO₂, and require high operating temperatures and provide limited efficiency. When chemical reactions are coupled with said processes in order to reduce, for example, nitrogen oxide emissions, then further materials are required that necessitate regular replacement.

Another problem inherent in conventional exhaust processing methods is the high weight burden these methods present, for example in automobiles. For instance, a three-way catalytic converter weighs on average between 2 - 5 kg. Furthermore, the efficiency of the motor is reduced by the additional airflow resistance imposed by the presence of a catalytic converter. In essence, the optimization of the exhaust gas composition and temperature to achieve optimal catalytic conversion is counterproductive to the goal of achieving economical motor operating conditions. These factors, among others, lead to an increase in fuel consumption, which consequently increases the amount of CO₂ in the exhaust emissions and raises the requirements for exhaust processing.

WO 2017/021194 A1, incorporated herein by reference, describes methods and devices for producing plasma. The apparatus for producing plasma requires at least a first electrode and a second electrode with a potential difference existing between them. The potential difference produces a discharge path between said electrodes in a discharge region between them. A magnetic field device is arranged such that a magnetic field vector is oriented at an angle to the discharge path. The magnetic field sets the discharge path into motion within the discharge region.

It is an object of the present invention to provide a plasma apparatus which is particularly suited for processing exhaust from combustion engines and provides an improvement over known exhaust processing methods.

### Summary

This object is achieved with the features of the independent claims. Dependent claims refer to preferred embodiments.

As discussed herein the term "plasma" refers to an ionized gas comprising positive ions and free electrons. A plasma apparatus is understood to be an apparatus capable of producing plasma.

According to a first aspect, the invention relates to a plasma apparatus for the processing of exhaust molecules, preferably from a combustion engine. The plasma apparatus comprises a first electrode structure and a second electrode structure spaced apart from the first electrode structure. The second electrode structure preferably comprises a first portion and a second portion spaced apart from the first portion. Preferably, a length of the discharge path between the first electrode structure and the first portion of the second electrode structure is less than a length of the discharge path between the first electrode structure and the second portion of the second electrode structure, such that the electrical discharge may be is initiated between the first electrode structure and the first portion of the second electrode structure. The length of the discharge path in this context may refer to the shortest possible discharge path between the respective structures (at the regular operating conditions of the device). In other words, a distance between the first electrode structure and the first portion may be less than a distance between the first electrode structure and the second portion. The distance in this context may refer to the distance between the respective structures to be bridged by the electrical discharge (at the regular operating conditions of the device). This may allow the electrical discharge to be initiated between the first electrode structure and the first portion, in particular when there is no flow or no rapid flow through the apparatus.

The first and second portions of the second electrode structure preferably are spatially separate, more preferably arranged at a distance from one another.

The plasma apparatus further comprises a voltage source which is connected to at least one of the first and second electrode structures such that a potential difference exists between the first and second electrode structures so that an electrical discharge is formed between the first and second electrode structures in a discharge region. In other words, a volume between the first and second electrode structures that is traversable by the electrical discharge may be considered to form the discharge region. The electrical discharge preferably has a discharge path. The electrical discharge path may form a curve.

The plasma apparatus further comprises a magnetic field generating means for generating a magnetic field in the discharge region, preferably such that a magnetic field vector of the magnetic field is oriented at an angle to the discharge path, enabling the discharge path to be set into motion within the discharge region. The discharge region is adapted to allow the exhaust molecules to flow therethrough such that at least a portion of the exhaust molecules flowing through the discharge region are excited, dissociated and/or ionized.

Preferably the plasma apparatus is configured to process exhaust flowed therethrough (e.g., through the discharge region) at speeds within a range of 10 m/sec to 350 m/sec, preferably within a range of 10 m/sec and 200 m/s, and more preferably within a range of 30 m/sec and 150 m/sec. Preferably, the plasma apparatus is configured to process exhaust flowed therethrough (e.g., through the discharge region at 10 m/s or more 30 m/s or more, 100 m/s or more, or 150 m/s or more). As such exhaust speeds are typical of some combustion engines, this allows the plasma apparatus to be employed in a variety of combustion engine systems. These speeds may be measured, for example, at the entrance of the apparatus.

Preferably the plasma apparatus is configured such that the electrical discharge is formed between the first electrode structure and the first portion when exhaust is flowed through the discharge region with a speed less than a first critical speed and wherein electrical discharge is formed between the first electrode structure and the second portion when exhaust is flowed through the discharge region at speed greater than a second critical speed. Forming an electrical discharge between the first electrode structure and the first portion enables a first operational mode adapted for exhaust processing at flow speeds lower than the first critical speed. Forming an electrical discharge between the first electrode structure and the second portion enables a second operational mode adapted for exhaust processing at flow speeds higher than the second critical speed. Thereby exhaust from a combustion engine flowing within a wide range of typical speeds may be effectively processed by the plasma apparatus.

Preferably, the first electrode is arranged before the second in the direction in which the exhaust molecules flow through the apparatus.

Preferably the first critical speed is 5 m/s, 10 m/s, 15 m/s, 20 m/s, 30 m/s, 50 m/s, 80 m/s, or 100 m/s. The first critical speed may be larger than 5 m/s, larger than 10 m/s, larger than 15 m/s, larger than 20 m/s, larger than 30 m/s, larger than 50 m/s, larger than 80 m/s, or larger than 100 m/s.

Preferably the second critical speed is 5 m/s, 10 m/s, 15 m/s, 20 m/s, 30 m/s, 50 m/s, 80 m/s, or 100 m/s. The second critical speed may be larger than 5 m/s, larger than 10 m/s, larger than 15 m/s, larger than 20 m/s, larger than 30 m/s, larger than 50 m/s, larger than 80 m/s, or larger than 100 m/s.

Preferably the first portion and second portion of the second electrode are in electrical communication. An electrical communication between the first and second portions may maintain a potential difference and/or current that is similar, or even uniform between the first electrode structure and the second electrode structure. Such electrical communication may be a direct electrical connection, e.g. by a direct electrical contact.

Preferably the plasma apparatus provides a duct through which the exhaust molecules flow, wherein the first portion of the second electrode structure is arranged closer to a center of the duct than the first electrode structure and/or than the second portion of the second electrode structure. A duct may allow for the effective containment of the exhaust gases and funnel said exhaust through the discharge region. The discharge region, the first electrode, the first portion of the second electrode and/or the second portion of the second electrode may be arranged along and/or inside the duct. The first electrode structure and/or the second portion of the second electrode structure may form a segment of the duct's inner wall.

Preferably the first portion of the second electrode structure is an elongated electrode that may be aligned along a longitudinal axis of the apparatus, preferably wherein the first portion is a wire or pin electrode. Preferably the first portion tapers in width along at least a segment thereof, for example from a first end to a second end. A tapered first portion may enable a smoother transition between a first operational mode and a second operational mode and/or prevent exhaust gases from flowing along regions of the plasma apparatus which are not accessible by the electrical discharge. The first portion may widen and/or increase in diameter along the direction in which the exhaust molecules flow.

Preferably the second portion of the second electrode structure is a ring electrode centered about the longitudinal axis. The second portion of the second electrode structure may also be a flat conducting wire mesh. The wire mesh may be formed into a ring.

Preferably the first electrode structure is a ring electrode centered about the longitudinal axis. The ring electrode enables a radially symmetric electrical discharge region to promote uniform occupancy of the electrical discharge region by the electrical discharge in all areas of the electrical discharge region.

Preferably the plasma apparatus further comprises a dielectric material, wherein the dielectric material is interposed between the first electrode structure and the second portion of the second electrode structure. A dielectric material may help to prevent electrical discharge from traveling along the surface of the plasma apparatus. The dielectric material may form a segment of the duct's inner wall.

Optionally, the dielectric material at least partially overlaps the first electrode structure and/or the second portion of the second electrode in the direction of the longitudinal axis. Preferably the dielectric material extends further towards the center of the duct than the second portion of the second electrode. Such configurations aid in promoting an arc-shaped electrical discharge whose apex is located closer to the longitudinal axis of the plasma apparatus. In this way a greater proportion of the duct may be accessible to the electrical discharge. It may also be helpful for obtaining a change from the first operational mode to the second operational mode at a predetermined speed.

Preferably the magnetic field generating means is not interposed between the first and second electrode structures. Optionally, the magnetic field generating means surrounds the first electrode structure and at least the first portion of the second electrode structure. Preferably the magnetic field generating means at least partially surrounds the second portion of the second electrode structure. Such a magnetic field device can provide a substantially parallel magnetic field along the longitudinal axis of the plasma apparatus, in particular in the region of the first electrode. Locating the end of the magnetic field generating means near the second portion of the second electrode structure may enable a magnetic field in that region directed radially inward toward the longitudinal axis. Thus, the apex of the electrical discharge curve in the second operational mode may be pushed further toward the longitudinal axis of the plasma apparatus.

The magnetic field generating means may have a first end and a second end along the longitudinal axis of the apparatus. The first electrode may be located between these first and second ends. Preferably, the first electrode is spaced in the longitudinal direction from the first and/or the second end. The second portion of the second electrode structure may be adjacent to one of the ends, and preferably is closer to this end in the longitudinal direction than the first electrode is from said first and/or second end of the field generating means.

Preferably the plasma apparatus is configured to come into contact with exhaust having a temperature within the range of - 40°C to 1500 °C, more preferably - 40°C to 0° C and/or within the range 100° C to 1500 °C, preferably within the range of 100°C to 900°C, and more preferably within the range of 100°C to 350°C. Such exhaust temperatures may be reached with conventional combustion engines, thus, the present apparatus may be particularly well adapted to work across a broad temperature range where other exhaust processing methods may not function.

The magnetic field generating means may comprise one or more magnets, in particular one or more magnets having a Curie temperature of more than 80°C, preferably more than 100°C or more than 150°C. For example, one or more AINiCo magnets, SmCo magnets, Sm (Co, FeCu, Zr) magnets, Sr-ferrite magnets, and/or Neodymium magnets with high Curie temperature (e.g., Nd₂Fe₁₄B) can be employed.

Preferably the discharge region is ring-shaped, circular, and/or spiral-shaped.

Preferably the magnetic field vector is oriented along the longitudinal axis in particular in the region of the first electrode. Such an orientation allows for the greatest transfer of energy from the magnetic field to the motion of the electrical discharge.

Preferably the magnetic field generating means is configured to provide a magnetic field strength which varies with a distance from the first and/or second electrode structure. Configured in this way the motion of the electrical discharge may be more uniform within the discharge region.

The plasma apparatus is optionally configured to support multiple electrical discharges. Multiple simultaneous electrical discharges can promote higher occupancy of the discharge region and enable the processing of exhaust at faster flow speeds.

Preferably the magnetic field generating means is configured to provide a magnetic field strength of at least 0.5 Tesla, preferably at least 1.0 Tesla, and more preferably at least 2.0 Tesla.

Preferably the voltage source is configured to provide a current greater than 20 mA, preferably greater than 50 mA, and more preferably greater than 100 mA.

According to a further aspect of the present disclosure, the second portion may be omitted and the second electrode structure may be provided as a unitary and/or continuous electrode structure aligned along a longitudinal axis of the apparatus. In this case, the second electrode structure preferably tapers in width along at least a segment thereof, for example from a first end to a second end. In particular, the second electrode structure may widen and/or increase in diameter along the direction in which the exhaust molecules flow.

As optionally applicable to all aspects described herein, the voltage source may be configured to provide a pulsed electrical current. The pulsed electrical current may have a period between 10 and 1000 milliseconds, preferably between 100 and 500 milliseconds, or a period of at least 10 milliseconds, at least 50 milliseconds, or at least 100 milliseconds. Alternatively or additionally, the voltage source may be configured to provide a pulsed electrical current having a duty cycle of at most 0.7 or at most 0.3. For example, the duty cycle may be between 0.7 and 0.05, preferably between 0.5 and 0.1.

A further aspect of the present invention is a vehicle, in particular an automobile, boat, ship, or aircraft, comprising the plasma apparatus described above. A combination of a vehicle combustion engine and the present plasma apparatus may provide more effective elimination of environmentally damaging exhaust components, such as, but not limited to hydrocarbons, CO₂ and nitrous gases. However, the plasma apparatus of the present invention may also be employed in other settings, for example for stationary generators (e.g., with a combustion engine), power plants, exhaust generated by heating (e.g., when burning oil or gas). It may also be used for disinfection or deodorization, e.g., for exhausts from or in clinics or kitchens.

A further aspect of the invention relates to a use of a plasma apparatus, comprising the steps of:
providing any of the plasma apparatuses previously described in combination with a combustion engine such that the apparatus is configured to receive a flow of exhaust molecules originating at the combustion engine therethrough;
operating the voltage source to establish a potential difference between the first and second electrode structures such that an electrical discharge having a discharge path is initiated in the discharge region between the first electrode structure and the second electrode structure;
generating a magnetic field in the discharge region with the magnetic field generating means, the magnetic field having a magnetic field vector oriented at an angle to the discharge path so that the discharge path is set into motion within the discharge region;
flowing the exhaust through the discharge region of the plasma apparatus such that at least a portion of the exhaust molecules are excited, disassociated, and/or ionized.

### Brief Description of the Drawings

The subject matter of the invention will be explained in more detail in the following text with reference to preferred exemplary embodiments which are illustrated in the attached drawings, in which:
Fig. 1 schematically shows a longitudinal cross-section of a plasma apparatus according to an embodiment of the present invention;
Fig. 2a schematically shows a front view of the plasma apparatus according to Fig. 1 illustrating the configuration of the electrical discharge paths when the exhaust flow speed is below a first critical speed;
Fig. 2b schematically shows a front view of the plasma apparatus according to Fig. 1 illustrating the configuration of the electrical discharge paths when the exhaust flow speed is above a second critical speed;
Fig. 3a schematically shows a longitudinal cross-section of a plasma apparatus according to invention variation illustrating the configuration of the electrical discharge paths when the exhaust flow speed is above a second critical speed;
Fig. 3b schematically shows a front view of the plasma apparatus according to Fig. 3a illustrating the configuration of the electrical discharge paths when the exhaust flow speed is above a second critical speed;
Fig. 4 illustrates exemplary results of ammonia (NH₃) concentration reduction through the use of the plasma apparatus according to the present invention.
Fig. 5 schematically illustrates a longitudinal cross section of a further plasma apparatus according to the present invention.

### Detailed Description

In principle, identical parts are provided with the same reference signs in the figures.

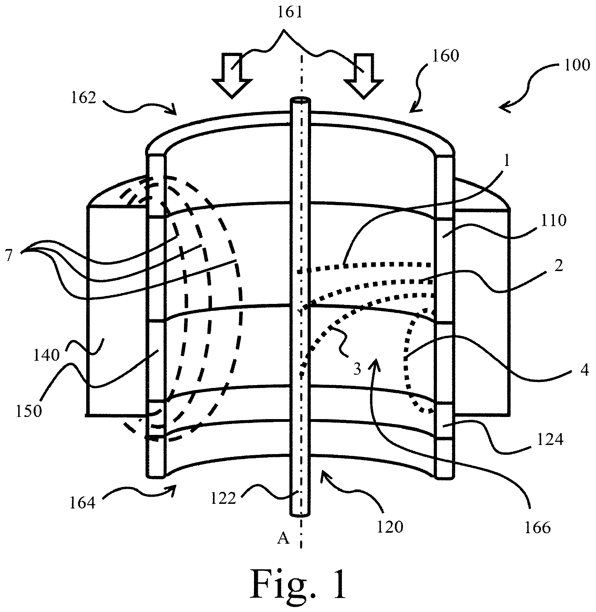

Fig. 1 schematically depicts a plasma apparatus 100 according to an embodiment of the present invention. The plasma apparatus 100 comprises a first electrode structure 110, a second electrode structure 120, a voltage source (not shown), and a magnetic field generating means 140. The second electrode 120 structure comprises a first portion 122 and a second portion 124. A dielectric material 150 may be positioned between the first electrode 110 and the second portion 124 of the second electrode 120.

The plasma apparatus 100 may form a duct or passage 160 through which exhaust may flow. The passage 160 may take on any shape that would allow for the flow of exhaust therethrough. In Fig. 1, the direction of flow of the exhaust is indicated by the arrows 161. Thus, the passage 160 may have an entry aperture 162 and an exit aperture 164 which are configured to allow exhaust to enter and exit the plasma apparatus 100, respectively. However, many different arrangements of entry aperture 162 and exit aperture 164 may be envisioned in connection with the present invention. Both the entry aperture 162 and the exit aperture 164 may comprise multiple independent openings, a patterned or grated opening, or multiple independent openings along the length of the passage 160.

As shown, the first electrode structure 110 may be formed as a ring electrode. The first electrode structure may form a part of the passage through which the exhaust may flow or may be additionally placed within the passage. The first electrode structure 110 preferably is positioned closer to the entry aperture 162 than the second portion 124 but may be located anywhere along the passage 160.

The second electrode structure 120 is separated into a first portion 122 and a second portion 124. The first portion 122 may be an elongated electrode, preferably a wire electrode, which may be aligned along a longitudinal axis A of the plasma apparatus 100. The first portion 122 may be any sort of elongated electrode, including a cylinder electrode or a pin electrode, etc. As shown, the first portion 122 may extend through the entire length of the plasma apparatus, optionally also through the entry aperture 162 and/or the exit aperture 164.

The second portion 124 may be a ring electrode. Similar to the first electrode structure 110, the second portion 124 may form a part of the passage 160 through which the exhaust flows and/or may be placed within the passage. A distance between any location on the second portion 124 and any location on the first electrode structure 110 preferably is greater than a smallest distance between the first portion 122 and the first electrode structure 110. The region of the passage 160 between the first electrode structure 110 and the first portion 122 and the region between the first electrode structure 110 and the second portion 124 in which an electrical discharge can form is referred to as a discharge region 166.

The voltage source (not illustrated) may provide a potential difference between the first electrode structure 110 and the second electrode structure 120. The voltage source may be connected to any one of the first electrode structure 110, the first portion 122, the second portion 124, or any combination of thereof. The voltage source is capable of generating a potential difference great enough to overcome the electrical resistance of the gas composition between the electrode structures 110, 120 such that an electrical discharge can form between the first electrode structure 110 and the second electrode structure 120 within the discharge region 166.

Generally, an electrical discharge will take place along a path that provides the least electrical resistance, which, in many cases, is also the shortest discharge path. Therefore, a minimum possible length of the discharge path within the discharge region 166 between the first electrode structure 110 and the first portion 122 of the second electrode structure 120 is less than a minimum possible length of the discharge path in the discharge region 166 between the first electrode structure 110 and the second portion 124 of the second electrode structure 120. This configuration ensures that the electrical discharge is statistically more likely to initiate between the first electrode structure 110 and the first portion 122 of the second electrode structure 120, in particular at low flow speeds or no flow. At higher flow speeds the length of the discharge path is altered, as discussed below.

Optionally, the first portion 122 of the second electrode structure 120 is closer to the first electrode structure 110 than the second portion 124, such that the electrical discharge preferentially forms between the first electrode structure 110 and the first portion 122. Alternatively, by strategic placement of dielectric and/or non-conducting materials the potential length of the discharge path may be altered relative to the distances between the first electrode structure 110 and the second electrode structure 120 (see the discussion of the dielectric material 150 below).

Other configurations of the first electrode structure 110, the first portion 122, and the second portion 124 may be conceived of, such as configured in a rectangular or segmented format (e.g., in the shape of a regular polygon).

The magnetic field generating means 140 may be a ring magnet which may surround at least partially or completely the passage 160, and/or the first and second electrode structures 110, 120 (e.g., the outside of the passage 160 and/or of the first electrode 110 and/or the second portion 124). The ring magnet creates a magnetic field 7 within the discharge region 166 of the passage 160. The magnetic field 7 is oriented at an angle with respect to the electrical discharge such that the electrical discharge is set into motion within the discharge region 166.

The configuration of the magnetic field generating means 140 preferably enables the presence of a magnetic field 7 which is substantially parallel with the longitudinal axis A of the plasma apparatus 100 in the discharge region 166 between the first electrode structure 110 and the first portion 122. Thus, the magnetic field 7 provides the greatest transfer of energy to the portions of the electrical discharge 1, 2, 3, 4 which are radially aligned and promotes their motion within the discharge region. The magnetic field 7 may be directed substantially radially inward in the region between the second portion 124 and the first portion 122. This radial alignment of the magnetic field 7 may help to push longitudinally aligned portions of the electrical discharge 4 radially inward toward the longitudinal axis, thus maximizing area swept over by the electrical discharge 4 when moving.

The magnetic field generating means 140 may be provided as a single permanent magnet, multiple permanent magnets, or as an electromagnet. The magnetic field generating means 140 may be provided as a coiled electromagnet comprising a longitudinal axis which is aligned with the longitudinal axis A of the plasma apparatus 100.

While the exact performance requirements of the magnetic field generating means 140 may be dictated by the overall configuration of the plasma apparatus, the magnetic field generating means 140 may be configured to provide a magnetic field strength of at least 0.5 Tesla, preferably at least 1.0 Tesla, and more preferably at least 2.0 Tesla. The strength of the magnetic field partially determines the speed of rotation of the electric discharge within the discharge area. Thus, with increasing magnetic field strengths, a faster motion of the plasma discharge can be obtained. The speed of electric discharge rotation may be of increased importance as the flow speeds of exhaust moving through the plasma apparatus is increased.

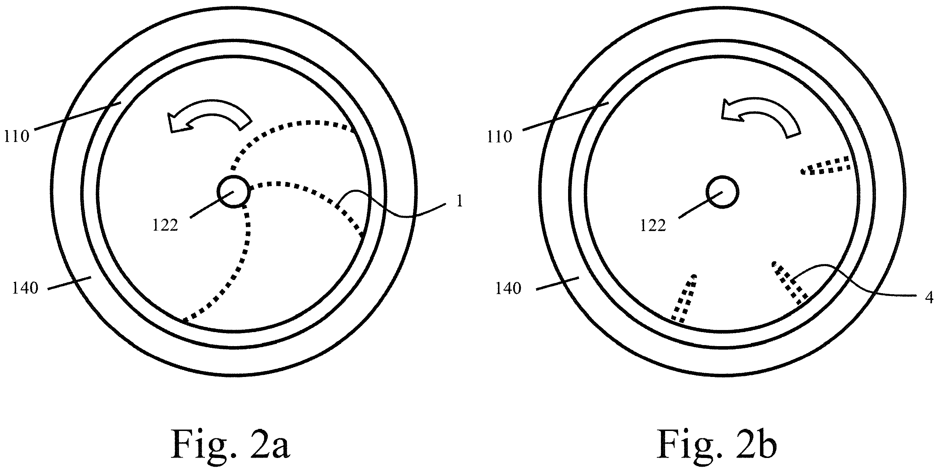

Figures 2a and 2b illustrate two operational modes of the plasma apparatus.

As previously described, the configuration of the plasma discharge is dependent on the flow speed of the gases passing therethrough, i.e. the flow rate of the exhaust. At exhaust flow speeds that are low (e.g. below the first critical speed) the electrical discharge 1 will tend to form between the first electrode structure 110 and the first portion 122, which presents a first operational mode depicted in Fig. 2a. Due to Lorentz forces, the magnetic field 7 will induce the one or more electrical discharge 1 to move within the discharge region 166. Optionally this motion is a rotational motion centered about the longitudinal axis A of the plasma apparatus 100 as illustrated by the arrow in Fig. 2a.

The magnetic field generating means 140 is optionally configured to induce the electrical discharge 1 to rotate around the longitudinal axis A of the plasma apparatus 100 with a rotational period shorter than the residency time of the exhaust molecules within the discharge region 166. Such a configuration preferably ensures that all portions of the exhaust flow will pass through the electrical discharge 1 at least once as the exhaust travels along the passage 160. In particular, the discharge path may have a thickness d. Preferably, the condition d > v × T is fulfilled, wherein v is a speed of the exhaust flow and T is the inverse of a frequency f according to which the electrical discharge returns to an initial position (e.g. a frequency f of the discharge path rotation). In this manner, it may be ensured (or the likelihood may be increased) that the discharge 1 when rotating will sweep over all exhaust molecules flowing through the apparatus.

The exhaust from the combustion engine may enter the plasma apparatus 100 through the entry aperture 162 and travel along the passage 160 to the exit aperture 164. As the exhaust transits the passage 160, it will pass through the discharge region 166 and come into contact with the electrical discharge 1. The electrical discharge 1 is configured to excite, dissociate and/or ionize a portion of the exhaust molecules that come into contact with the electrical discharge 1. Optionally, the speed of the electrical discharge 1 as it moves within the discharge region 166 is adapted such that at least some of the exhaust molecules will pass through the electrical discharge 1 more than once.

As the speed of the exhaust flow is increased this imparts a greater force on the electrical discharge 1. As previously mentioned, the electrical resistance inherent in an electrical discharge through a gaseous medium is dependent on the length of the electrical discharge path. With increasing flow speed, the length of an electrical discharge between to fixed points may tend to increase. Without wanting to be bound by theory, it is assumed that at some point such electrical discharge may collapse.

Providing the first portion 122 of the second electrode 120 as an elongated structure may allow for some adaptation of the electrical discharge between the first electrode structure 110 and the second electrode structure 120 (see lines 1, 2, 3 in Fig. 1, which illustrate the electrical discharge at increasing flow speeds). Namely, the electrical discharge 1 is increasingly pushed in the direction 161 of the exhaust flow, i.e. toward the exit aperture 164, which is shown by electrical discharge lines 2 and 3 in Fig. 1. In this manner, some variation in flow speed may be accommodated for.

As the first electrode structure 110 preferably has a limited length in the longitudinal direction, the portion of the electrical discharge in contact with the first electrode structure 110 cannot move beyond the limit of the electrode 110 (see electrical discharge 3 in Fig. 1). In contrast, the portion of the electrical discharge in contact with the first portion 122 may be compelled by the exhaust along the length of the first portion 122 in the direction of the exhaust flow, i.e. toward the exit aperture 164. Thus, with higher exhaust flow speeds which are still below the first critical flow speed the electrical discharge 1, 2, 3 may take on a more curved configuration within the discharge region 166. As the electrical discharge 1 assumes a more curved path 2, 3 and thereby lengthens, the electrical resistance of the electrical discharge path increases.

To accommodate for additional variation in flow speed, in particular for high flow speeds, the plasma apparatus 100 can assume a second operational mode when the exhaust flow speed is greater than a second critical speed as depicted in Fig. 1 and Fig. 2b, wherein an electrical discharge 4 is formed between the first electrode structure 110 and the second portion 124 of the second electrode structure 120. For example, the second operational mode may be reached when the length of the electrical discharge 4 between the first electrode structure 110 and the second portion 124 is shorter than the length of the electrical discharge 3 between the first electrode structure 110 and the first portion 122 under the influence of the exhaust flow forces.

It is understood that the first and second operational modes are not necessarily mutually exclusive. As multiple electrical discharges may be present at any one time during operation, some electrical discharges may be in the first operational mode and some may be in the second operational mode. Furthermore, due to the probabilistic nature of the electrical discharge, a single discharge may transition back and forth between the first and second operational modes.

In the context of the present invention the first critical speed may then be defined, for example, as the exhaust speed wherein at least 50% of electrical discharges are formed in the first operational configuration. Similarly, the second critical speed may then be defined, for example, as the exhaust speed wherein at least 50% of electrical discharges are formed in the second operational configuration. The first critical speed may be less than, equal to, or greater than the second critical speed.

While it is clear that the exact voltage and/or current provided by the voltage source may be determined by the exact requirements of the system, generally, the voltage source may be configured to provide a current greater than 20 mA, preferably greater than 50 mA, and more preferably greater than 100 mA. Said current may be sufficient to overcome the resistance of the medium in between the first electrode structure 110 and the second electrode structure 120. In optional configurations the voltage source may be configured to provide a pulsed or intermittent potential difference between the first and second electrode structures 110, 120. In some circumstances the plasma discharge may continue to provide an ionizing/dissociating effect within the discharge region for a time after being terminated. Thus, this plasma "afterglow" can potentially be utilized to reduce overall power requirements of the plasma apparatus and the temperature of gases flowing through the plasma apparatus could potentially be lowered. The voltage source may then be configured to provide a pulsed electrical current having a period between 10 and 1000 milliseconds, or preferably between 100 and 500 milliseconds. The voltage source may also be configured to provide a pulsed electrical current having a duty cycle between 0.7 and 0.05, preferably between 0.5 and 0.1.

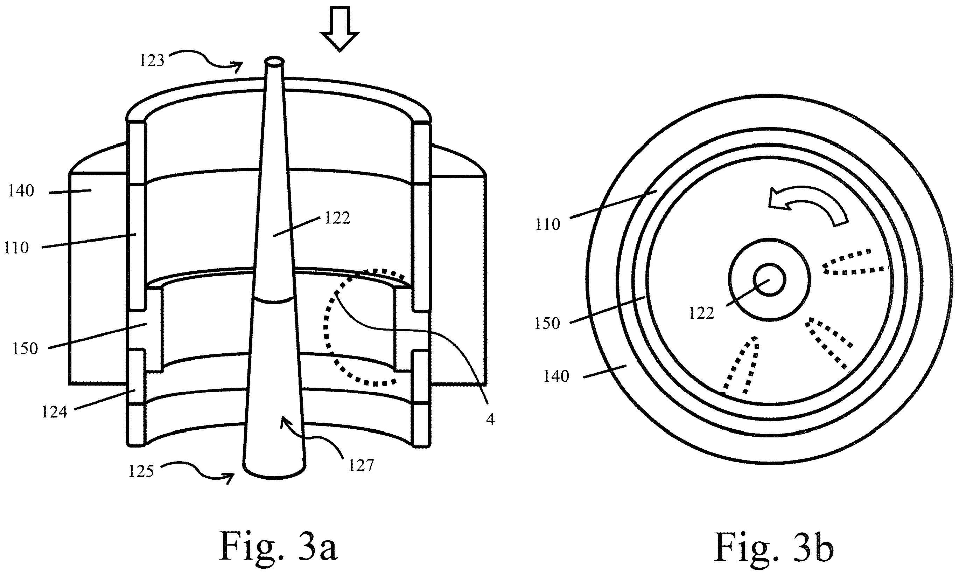

Fig. 3a and Fig. 3b illustrate further optional aspects.

As shown, the dielectric material 150 may be positioned between the first electrode structure 110 and the second portion 124 of the second electrode structure 120.

As can be observed in Figs. 2a and 2b, when the plasma apparatus transitions between the first operational mode and the second operational mode, the radial area accessible by the electrical discharge 4 is potentially reduced. In the second configuration the electrical discharge 4 extends principally in a longitudinal direction instead of a radial direction. During operation this may result in a portion of the exhaust flow not coming into contact with the electrical discharge path 4.

As shown in Fig. 3a, the radial area swept over by the electrical discharge 4 in the second configuration may be increased. The dielectric layer 150 in this configuration extends into the passage 160 farther than the first electrode structure 110 and the second portion 124. This prevents the electrical discharge 4 from potentially extending in a relatively flat manner along the outer wall of the passage 160 and forces the discharge 4 into a more ellipsoidal configuration with an apex closer to the longitudinal axis of the plasma apparatus 100. Consequently, the electrical discharge 4 may extend farther inward toward the longitudinal axis of the plasma apparatus 100 and may occupy a greater proportion of the radial cross-section of the passage 160.

As shown in Fig. 3a, the dielectric material may overlap the first electrode structure 110 and/or the second portion 124 to a certain extent. Without wanting to be bound by theory, it is assumed that this may further promote an ellipsoidal shape, e.g. with a broader minor axis.

Another optional feature that is illustrated in Figs. 3a and 3b in an exemplary manner is a configuration of the first portion 122 which tapers in diameter along the longitudinal direction. The end 123 of the first portion 122 proximate to the entry aperture 162 presents a smaller diameter than the end 125 of the first portion 122 proximate the exit aperture 164. Thus, as the electrical discharge moves in the direction of the exhaust flow the radial cross-sectional area of the passage 160 is reduced as shown in Fig. 3b. The tapering of the first portion 122 in the direction of flow of exhaust is not necessarily smooth, but may be made in stages or plateaus, including a single diameter step change. A tapered first portion 122 may also present the advantage of providing an aerodynamic shape for the guiding exhaust flow.

A further optional feature that is illustrated in Figs. 3a and 3b in an exemplary manner is the presence of a dielectric material 127 incorporated in or surrounding a portion of the first portion 122. The dielectric material 127 preferably is located closer to the second portion 124 than the first electrode structure 110. The first dielectric material may help to further promote the transition of the electrical discharge 1 between the first operational mode and the second operational mode and may prevent the electrical discharge 4 from returning to the first operational mode when the apex of the curve of the electrical discharge 4 is pushed farther inward toward the longitudinal axis.

An alternative configuration related to Figs. 3a and 3b, is contemplated in which the second portion 124 is provided as a unitary and/or continuous electrode structure aligned along the longitudinal axis of the apparatus. The second electrode structure is provided by a central (first) portion 122 that tapers in width along at least a segment thereof along the direction in which the exhaust molecules flow. That is, the diameter of the second electrode structure is smaller at the end 123 and progressively gets larger in the direction of the other end 125. It is believed that also this may be helpful for avoiding a rupture of the electrical discharge at higher flow speeds.

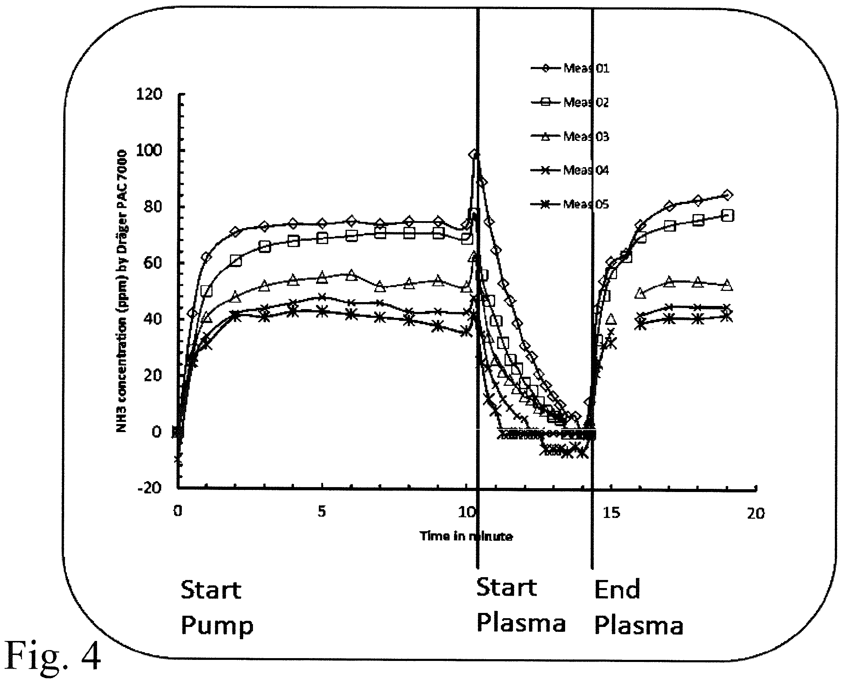

Fig. 4 provides an exemplary data set of ammonia (NH₃) concentration when passing through an embodiment of the plasma apparatus according to the present invention. As shown, five different trials were performed with different initial concentrations of ammonia. At the first vertical line the plasma apparatus is initialized and at the second vertical line the function of the plasma apparatus is terminated. As can be observed, the concentration of ammonia measured in the exhaust rapidly reduces with use of the plasma apparatus. These exemplary results were obtained with relatively low flow speeds.

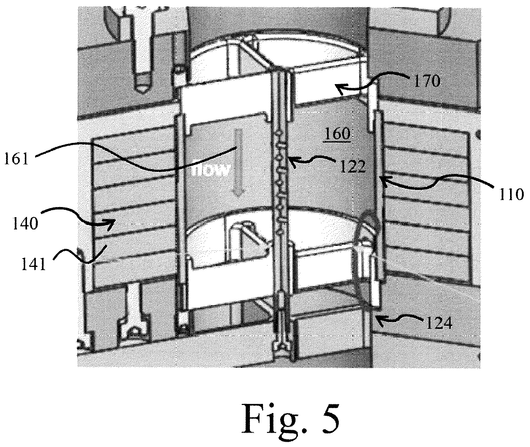

Fig. 5 illustrates a plasma apparatus 100 according the present invention in some more detail. As indicated by the arrow 161, the exhaust flows in from the top of the apparatus. The first electrode structure 110 is located centrally along the passage 160. The first portion 122 is located along the longitudinal axis. The second portion 124 is located further along in the exhaust flow direction. As depicted, the plasma apparatus 100 is in the second operational mode with an electrical discharge 4 formed between the first electrode structure 110 and the second portion 124.

An option illustrated in Fig. 5 is an electrical connection between the first portion 122 and the second portion 124. Said electrical connection may assist in maintaining a uniform potential difference between the first electrode structure 110 and the second electrode structure 120. A further optional configuration is depicted in Fig. 5, wherein one or more non-conducting support structures 170 may hold the first portion 122 in place along the longitudinal axis of the plasma apparatus.

As further shown in Fig. 5 (in an exemplary manner and applicable to all embodiments), the magnetic field generating means 140 may be provided as a stacked series of ring magnets 141.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one".

The following are preferred aspects of the invention:
1. A plasma apparatus for the processing of exhaust molecules from a combustion engine, the plasma apparatus comprising:
   a first electrode structure;
   a second electrode structure spaced apart from the first electrode structure, the second electrode structure comprising:
      a first portion;
      a second portion;
   a voltage source which is connected to at least one of the first and second electrode structures such that a potential difference exists between the first and second electrode structures so that an electrical discharge is formed between the first and second electrode structures, the electrical discharge having a discharge path, wherein a discharge region is a volume between the first and second electrode structures that is traversable by the discharge path;
   a magnetic field generating means for generating a magnetic field in the discharge region such that a magnetic field vector of the magnetic field is oriented at an angle to the discharge path enabling the discharge path to be set into motion within the discharge region;
   wherein the discharge region is adapted to allow the exhaust molecules to flow therethrough such that a portion of the exhaust molecules flowing through the discharge region are excited, dissociated and/or ionized;
   wherein a length of the discharge path between the first electrode structure and the first portion of the second electrode structure is less than a length of the discharge path between the first electrode structure and the second portion of the second electrode structure, preferably such that the electrical discharge is initiated between the first electrode structure and the first portion of the second electrode structure; and/or wherein a distance between the first electrode structure and the first portion is less than a distance between the first electrode structure and the second portion, preferably such that the electrical discharge is initiated between the first electrode structure and the first portion.
2. The plasma apparatus of aspect 1, wherein the plasma apparatus is configured to process exhaust flowed through the discharge region at speeds within a range of 10 m/s to 350 m/s, preferably within a range of 10 m/s and 200 m/s, and more preferably within a range of 30 m/s and 150 m/s.
3. The plasma apparatus of aspect 1 or aspect 2, wherein the plasma apparatus is configured such that the electrical discharge is formed between the first electrode structure and the first portion when exhaust is flowed through the discharge region with a speed less than a first critical speed and wherein electrical discharge is formed between the first electrode structure and the second portion when exhaust is flowed through the discharge region at a speed greater than a second critical speed.
4. The plasma apparatus of aspect 3, wherein the first critical speed is 5 m/s, 10 m/s, 15 m/s, or 20 m/s.
5. The plasma apparatus of aspect 3 or aspect 4, wherein the second critical speed is 5 m/s, 10 m/s, 15 m/s, or 20 m/s.
6. The plasma apparatus of any of the previous aspects, wherein the first portion and second portion are in electrical communication.
7. The plasma apparatus according to any of the previous aspects, wherein the plasma apparatus provides a duct through which the exhaust molecules flow, wherein the second electrode structure is arranged closer to a center of the duct than the first electrode structure and/or than the second portion of the second electrode structure.
8. The plasma apparatus of any of the previous aspects, wherein the first portion of the second electrode structure is an elongated electrode aligned along a longitudinal axis of the apparatus, preferably wherein the first portion is a wire or pin electrode.
9. The plasma apparatus of aspect 8, wherein the first portion tapers in width from a first end to a second end.
10. The plasma apparatus of any of the previous aspects,
   wherein the second portion of the second electrode structure is a ring electrode centered about the longitudinal axis; and/or
   wherein the second portion of the second electrode structure is a flat conducting wire mesh.
11. The plasma apparatus of any of the previous aspects, wherein the first electrode structure is a ring electrode centered about the longitudinal axis.
12. The plasma apparatus of any of the previous aspects, further comprising a dielectric material, wherein the dielectric material is interposed between the first electrode structure and the second portion of the second electrode structure.
13. The plasma apparatus of aspect 12,
   wherein the dielectric material at least partially overlaps the first electrode structure and/or the second portion in the direction of the longitudinal axis; and/or
   wherein the plasma apparatus provides a duct through which the exhaust molecules flow and the dielectric material extends further towards the center of the duct than the second portion of the second electrode.
14. The plasma apparatus of any of the previous aspects,
   wherein the magnetic field generating means is not interposed between the first and second electrode structures; and/or
   wherein the magnetic field generating means surrounds the first electrode structure and at least the first portion of the second electrode structure, preferably wherein the magnetic field generating means at least partially surrounds the second portion of the second electrode structure.
15. The plasma apparatus of any of the previous aspects, wherein the plasma apparatus is configured to come into contact with exhaust having a temperature within the range of - 40 °C to 1500 °C, preferably - 40°C to 0° C, - 40 °C to 50 ° C and/or within the range 100° C to 1500 °C, preferably within the range of 100 °C to 900 °C, and more preferably within the range of 100 °C to 350 °C.
16. The plasma apparatus of any of the previous aspects, wherein the discharge region is ring-shaped, circular, and/or spiral-shaped.
17. The plasma apparatus of any of the previous aspects, wherein the magnetic field vector is oriented along the longitudinal axis.
18. The plasma apparatus of any of the previous aspects, wherein the magnetic field generating means is configured to provide a magnetic field strength which varies with a distance from the first and/or second electrode structure.
19. The plasma apparatus of any of the previous aspects, wherein the plasma apparatus is configured to support multiple electrical discharges.
20. The plasma apparatus of any of the previous aspects, wherein the magnetic field generating means is configured to provide a magnetic field strength of at least 0.5 Tesla, preferably at least 1.0 Tesla, and more preferably at least 2.0 Tesla.
21. The plasma apparatus of any of the previous aspects, wherein the voltage source is configured to provide a current greater than 20 mA, preferably greater than 50 mA, and more preferably greater than 100 mA.
22. The plasma apparatus of any of the previous aspects, wherein the voltage source is configured to provide a pulsed electrical current, wherein the pulsed electrical current preferably has
   a period between 10 and 1000 milliseconds, preferably between 100 and 500 milliseconds; or
   a period of at least 10 milliseconds, at least 50 milliseconds, or at least 100 milliseconds.
23. The plasma apparatus of any of the previous aspects, wherein the voltage source is configured to provide a pulsed electrical current having a duty cycle of:
   between 0.7 and 0.05, preferably between 0.5 and 0.1; or
   at most 0.7 or at most 0.5.
24. A vehicle, in particular an automobile, comprising the plasma apparatus of any of the previous aspects.
25. Use of a plasma apparatus according to any of the previous aspects, comprising the steps of:
   providing the plasma apparatus in combination with a combustion engine such that the apparatus is configured to receive a flow of exhaust molecules originating at the combustion engine therethrough;
   operating the voltage source to establish a potential difference between the first and second electrode structures such that an electrical discharge having a discharge path is initiated in the discharge region between the first electrode structure and the second electrode structure;
   generating a magnetic field in the discharge region with the magnetic field generating means, the magnetic field having a magnetic field vector oriented at an angle to the discharge path so that the discharge path is set into motion within the discharge region;
   flowing the exhaust through the discharge region of the plasma apparatus such that at least a portion of the exhaust molecules are excited, dissociated, and/or ionized.

## Claims

1. A plasma apparatus for the processing of exhaust molecules from a combustion engine, the plasma apparatus comprising:
a first electrode structure;
a second electrode structure spaced apart from the first electrode structure, the second electrode structure comprising:
a first portion;
a second portion;
a voltage source which is connected to at least one of the first and second electrode structures such that a potential difference exists between the first and second electrode structures so that an electrical discharge is formed between the first and second electrode structures, the electrical discharge having a discharge path, wherein a discharge region is a volume between the first and second electrode structures that is traversable by the electrical discharge;
a magnetic field generating means for generating a magnetic field in the discharge region such that a magnetic field vector of the magnetic field is oriented at an angle to the discharge path enabling the discharge path to be set into motion within the discharge region;
wherein the discharge region is adapted to allow the exhaust molecules to flow therethrough such that a portion of the exhaust molecules flowing through the discharge region are excited, dissociated and/or ionized;
wherein a length of the discharge path between the first electrode structure and the first portion of the second electrode structure is less than a length of the discharge path between the first electrode structure and the second portion of the second electrode structure, such that the electrical discharge is initiated between the first electrode structure and the first portion of the second electrode structure.

2. The plasma apparatus of claim 1, wherein the plasma apparatus is configured to process exhaust flowed through the discharge region at speeds within a range of 10 m/s to 350 m/s, preferably within a range of 10 m/s and 200 m/s, and more preferably within a range of 30 m/s and 150 m/s.

3. The plasma apparatus of claim 1 or claim 2, wherein the plasma apparatus is configured such that the electrical discharge is formed between the first electrode structure and the first portion when exhaust is flowed through the discharge region with a speed less than a first critical speed and wherein electrical discharge is formed between the first electrode structure and the second portion when exhaust is flowed through the discharge region a speed greater than a second critical speed.

4. The plasma apparatus of claim 3,
wherein the first critical speed is 5 m/s, 10 m/s, 15 m/s, or 20 m/s; and/or
wherein the second critical speed is 5 m/s, 10 m/s, 15 m/s, or 20 m/s.

5. The plasma apparatus according to any of the previous claims, wherein the plasma apparatus provides a duct through which the exhaust molecules flow, wherein the second electrode structure is arranged closer to a center of the duct than the first electrode structure and/or than the second portion of the second electrode structure.

6. The plasma apparatus of any of the previous claims, wherein the first portion of the second electrode structure is an elongated electrode aligned along a longitudinal axis of the apparatus, preferably wherein the first portion is a wire or pin electrode.

7. The plasma apparatus of claim 6, wherein the first portion tapers in width from a first end to a second end.

8. The plasma apparatus of any of the previous claims,
wherein the second portion of the second electrode structure is a ring electrode centered about the longitudinal axis; and/or
wherein the second portion of the second electrode structure is a flat conducting wire mesh.

9. The plasma apparatus of any of the previous claims, wherein the first electrode structure is a ring electrode centered about the longitudinal axis.

10. The plasma apparatus of any of the previous claims,
further comprising a dielectric material, wherein the dielectric material is interposed between the first electrode structure and the second portion of the second electrode structure;
wherein the dielectric material at least partially overlaps the first electrode structure and/or the second portion in the direction of the longitudinal axis; and/or
wherein the plasma apparatus provides a duct through which the exhaust molecules flow and the dielectric material extends further towards the center of the duct than the second portion of the second electrode.

11. The plasma apparatus of any of the previous claims,
wherein the magnetic field generating means is not interposed between the first and second electrode structures; and/or
wherein the magnetic field generating means surrounds the first electrode structure and at least the first portion of the second electrode structure, preferably wherein the magnetic field generating means at least partially surrounds the second portion of the second electrode structure.

12. The plasma apparatus of any of the previous claims,
wherein the magnetic field vector is oriented along the longitudinal axis; and/or
wherein the magnetic field generating means is configured to provide a magnetic field strength which varies with a distance from the first and/or second electrode structure.

13. The plasma apparatus of any of the previous claims,
wherein the magnetic field generating means is configured to provide a magnetic field strength of at least 0.5 Tesla, preferably at least 1.0 Tesla, and more preferably at least 2.0 Tesla; and/or
wherein the voltage source is configured to provide a current greater than 20 mA, preferably greater than 50 mA, and more preferably greater than 100 mA; and/or
wherein the voltage source is configured to provide a pulsed electrical current having a period between 10 and 1000 milliseconds, preferably between 100 and 500 milliseconds, with a duty cycle between 0.5 and 0.05, preferably between 0.3 and 0.1.

14. A vehicle, in particular an automobile, comprising the plasma apparatus of any of the previous claims.

15. Use of a plasma apparatus according to any of the previous claims, comprising the steps of:
providing the plasma apparatus in combination with a combustion engine such that the apparatus is configured to receive a flow of exhaust molecules originating at the combustion engine therethrough;
operating the voltage source to establish a potential difference between the first and second electrode structures such that an electrical discharge having a discharge path is initiated in the discharge region between the first electrode structure and the second electrode structure;
generating a magnetic field in the discharge region with the magnetic field generating means, the magnetic field having a magnetic field vector oriented at an angle to the discharge path so that the discharge path is set into motion within the discharge region;
flowing the exhaust through the discharge region of the plasma apparatus such that at least a portion of the exhaust molecules are excited, dissociated, and/or ionized.
